# EUROPÄISCHE PATENTSCHRIFT

(11) **EP 2 368 757 B1**
(45) Veröffentlichungstag und Bekanntmachung des Hinweises auf die Patenterteilung: **08.05.2013**
(21) Anmeldenummer: 11158463.7
(22) Anmeldetag: 16.03.2011
(51) Int. Cl.: B60P 1/02, B62D 61/12, B62D 63/06

(54) **Land- und forstwirtschaftlicher Zugmaschinen-Anhänger**
Agricultural and forestry traction engine trailer
Remorque de machines de traction agricole et forestière

(30) Priorität: 25.03.2010 AT 4822010
(43) Veröffentlichungstag der Anmeldung: 28.09.2011
(73) Patentinhaber: Mezgolits, Stefan, 7034 Zillingtal (AT)
(72) Erfinder: Mezgolits, Stefan, 7034 Zillingtal (AT)
(74) Vertreter: Pinter, Rudolf

(56) Entgegenhaltungen:
- EP-A1- 0 467 452
- WO-A1-2006/060327
- FR-A1- 2 222 244
- SU-A1- 709 016
- US-A- 5 407 251
- US-B1- 6 247 712

## Beschreibung

Die Erfindung betrifft einen land- und forstwirtschaftlichen Zugmaschinen-Anhänger mit einem eine in der Höhe verstellbare Deichsel zur Ankoppelung an die Zugmaschine aufweisenden Rahmen, an dem an den Enden von in der Höhe verschwenkbaren Hebelarmen zumindest zwei Räder angeordnet sind, durch deren Verschwenkung relativ zum Rahmen dieser in der Höhe über Grund verstellbar ist.

Derartige Anhänger sind in verschiedensten Ausführungen bekannt und ermöglichen durch das Absenken des Rahmens und damit der darauf angeordneten lasttragenden Elemente (im einfachsten Falle ein Ladeboden, ein Gitterrost oder dergleichen) eine einfache und komfortable Be- und Entladung ohne dass das Ladegut händisch angehoben oder zusätzliche Hubhilfen, Hubstapler oder dergleichen verwendet werden müssten. Abgesehen von einer natürlich auch möglichen Absenkung der Ladefläche oder der sonstigen lasttragenden Elemente relativ zum unverändert bleibenden Rahmen ermöglicht die eingangs beschriebene Absenkung des Rahmens durch Verschwenkung der Radaufnahmen eine einfache Ausbildung und Handhabung, wobei allerdings eine Höhenverstellung bzw. Verschwenkung der Deichsel relativ zum Rahmen vorgesehen werden muss, wenn die Neigung des Rahmens sich bei einer Höhenverstellung nicht verändern soll.

Anordnungen der eingangs genannten Art sind beispielsweise aus der US 2,711,329 oder der EP 1 827 900 bekannt; Anordnungen mit relativ zum Rahmen absenkbaren Ladeboden bzw. Ladegabeln oder dergleichen beispielsweise aus GB 2,145,995 oder WO 06012652.

Obwohl die Be- und Entladbarkeit derartiger Anhänger gegenüber konventionellen Anhängern deutlich verbessert ist, besteht doch gerade bei den eingangs angesprochenen Ausbildungen mit Rahmenabsenkung über die Höhenverstellung der Räder ein gewisses Problem hinsichtlich der Rangierbarkeit, da die verstellbaren Räder zumeist sehr weit hinten am Anhänger angebracht werden müssen, um die seitliche Be- und Entladbarkeit nicht zu behindern. Dies führt dann dazu, dass beispielsweise im Forstbetrieb nur sehr eingeschränkt zurückgefahren werden kann, da enge Wege bzw. engstehende Bäume das Rückwärtsfahren stark behindern.

Aus der SU 709 016 A1 ist weiters eine an die Dreipunkthydraulik der Zugmaschine anbaubare Transportachse bekannt, mit der überschwere Geräte - wie beispielsweise das dargestellte Bodenbearbeitungsgerät - vorschriftsmäßig und ohne die gelenkte Vorderachse der Zugmaschine unzulässig zu entlasten zum Arbeitseinsatz transportiert werden können. Der "Einachsanhänger" ist im unteren Bereich über eine einzelne, mittige Anhängerkupplung mit einem trapezartigen Teil des Zugmaschinenanbaus verbunden und im oberen Bereich über eine in der Länge verstellbare zentrale Stange an dem oberen, dritten Punkt des Dreipunktanbaus angelenkt. Dieser "Anhänger" ist also lediglich seitlich gegenüber der Zugmaschine verschwenkbar, was für den normalen Fahrbetrieb erforderlich ist. Bei einem Hochheben der Transportachse über ein Einfahren eines Hydraulikzylinders werden nun zwar die Räder vom Boden abgehoben, jedoch gleichzeitig durch das parallel gesteuerte Einfahren eines weiteren Hydraulikzylinders das Bearbeitungsgerät in seine Arbeitsstellung abgesenkt. In dieser Arbeitsposition greift das pflugscharähnliche Werkzeug an der Unterseite des Bearbeitungsgeräts in den Boden ein, womit keinerlei Rangieren des Gesamtfahrzeuges möglich und auch gar nicht mehr beabsichtigt ist.

Aufgabe der vorliegenden Erfindung ist es, einen Zugmaschinen-Anhänger der eingangs genannten Art so zu verbessern, dass die erwähnten Nachteile der beschriebenen bekannten Anordnungen vermieden werden und dass insbesonders die Rangierbarkeit beim Rückwärtsfahren der Zugmaschine vereinfacht wird.

Diese Aufgabe wird bei einem Anhänger der eingangs genannten Art dadurch gelöst, dass der Rahmen an seiner im angehängten Zustand der Zugmaschine zugewandten Seite eine Tragevorrichtung zur Befestigung an der Zugmaschinen-Hebehydraulik aufweist und damit von dieser samt Rädern vom Grund abgehoben verfahrbar ist. Im normalen Fahrbetrieb und insbesonders im vollbeladenen Zustand kann damit der Anhänger wie üblich mit der Deichsel an der Anhängevorrichtung der Zugmaschine angekoppelt sein, welche damit zusammen mit den den Rahmen mehr oder weniger weit vom Grund abhebenden Rädern die Last trägt. Zum Be- und Entladen kann der Rahmen mit der Ladefläche bis auf den Boden abgesenkt werden ohne dass der Anhänger von der Zugmaschine abgekoppelt werden müsste. Im entladenen oder zumindest teilentladenen Zustand kann der Anhänger samt Rädern vom Grund abgehoben und damit als starr verbundener Ansatz an der Zugmaschine von dieser auf einfache Weise verfahren werden, was das Rangieren auch in engen Forststraßen oder dergleichen erlaubt. Die Zugmaschine muss natürlich entsprechend schwer und die Hebehydraulik entsprechend dimensioniert sein, damit es auch im schweren Gelände nicht zu einem Abheben der Vorderräder bei einem derartigen Fahrbetrieb kommen kann.

Die Tragevorrichtung zur starren Befestigung des Rahmens an der Zugmaschinen-Hebehydraulik kann in bevorzugter weiterer Ausgestaltung der Erfindung zumindest zum Teil an der, vorzugsweise hydraulisch pneumatisch hochklapp- und in der obersten Stellung fixierbaren, Deichsel angeordnet sein, was eine Vereinfachung der Ausbildung und Anhängerbedienung ermöglicht. Davon abgesehen kann die Deichsel aber natürlich zur Ermöglichung der Ankoppelung des Rahmens an die Hebehydraulik auch vom Rahmen abnehmbar, in diesen einschiebbar oder ähnlich, ausgeführt sein.

Die die Räder tragenden Hebelarme sind in weiters bevorzugter Ausgestaltung der Erfindung voneinander unabhängig gegenüber dem Rahmen verstellbar, vorzugsweise hydraulisch oder pneumatisch. Damit ist ein Hangausgleich bei Geländeschrägfahrt möglich, womit durch Schwerpunktverlagerung die Kippgefahr wesentlich verringert wird. Weiters kann für das Be- und Entladen damit auch das der Anhänger samt Ladefläche schräggestellt werden.

Nach einer weiters bevorzugten Ausgestaltung der Erfindung ist vorgesehen, dass der Rahmen an der der Zugmaschinen-Hebehydraulik abgewandten Hinterseite eine weitere Tragevorrichtung zur wahlweisen Ankoppelung an die Zugmaschine oder einen zusätzlichen Transportbehälter, eine Arbeitsvorrichtung, oder dergleichen, aufweist.

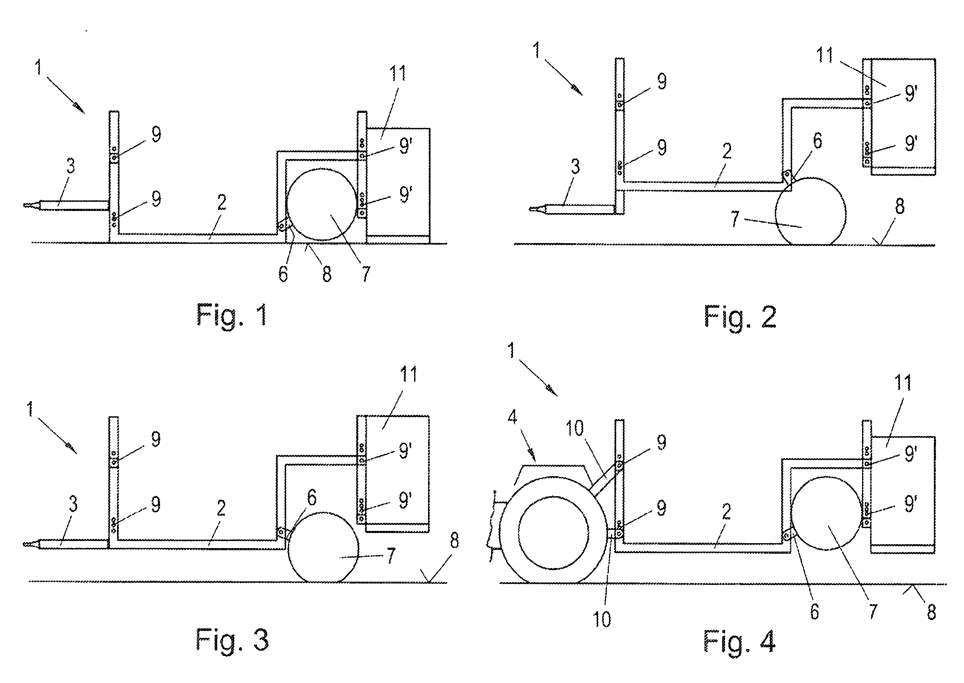

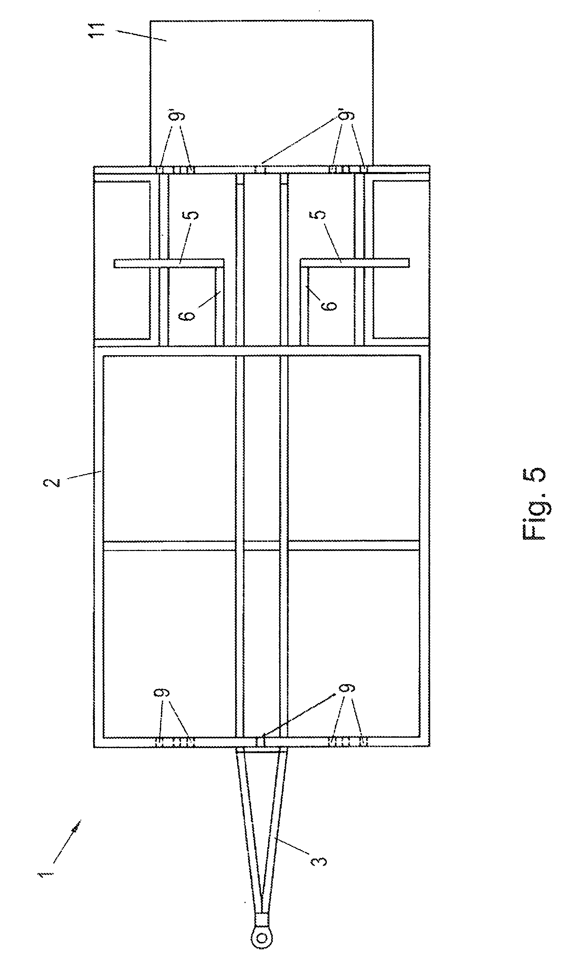

Die Erfindung wird im Folgenden anhand des in der Zeichnung schematisch dargestellten Ausführungsbeispiels näher erläutert. Die Figuren 1 bis 4 zeigen dabei einen erfindungsgemäßen Zugmaschinen-Anhänger in verschiedenen Betriebspositionen in einer Seitenansicht und Fig. 5 den Anhänger in einer der Positionen nach Fig. 1 bis 3 von oben.

Der Anhänger 1 weist einen Rahmen 2 auf, an dessen in den Darstellungen linker Seite eine in der Höhe verstellbare Deichsel 3 auf hier nicht näher dargestellte Weise befestigt ist. Diese Deichsel 3 ist bei der an der Zugmaschine 4 angekoppelten Betriebsposition nach Fig. 4 abgenommen. An den Enden 5 von in der Höhe verschwenkbaren Hebelarmen 6 sind zwei Räder 7 angeordnet, durch deren Verschwenkung relativ zum Rahmen 2 dieser in der Höhe über Grund 8 verstellbar ist.

Der Rahmen 2 weist an seiner im angehängten Zustand der Zugmaschine 4 zugewandten Seite eine Tragevorrichtung 9 zur Befestigung an der Zugmaschinen-Hebehydraulik 10 auf und ist damit von dieser samt Rädern 7 vom Grund abgehoben verfahrbar, wie dies hier nur in Fig. 4 dargestellt ist.

Abgesehen von der dargestellten Ausbildung mit der in der Betriebsposition nach Fig. 4 abgenommener Deichsel (3 in den anderen Figuren) könnte die Deichsel 3 aber auch vorzugsweise hydraulisch oder pneumatisch betätigt hochklapp- und in der obersten Stellung fixierbar sein, womit dann der obere mittlere Punkt der Tragevorrichtung 9 auch unmittelbar an der hochgestellten Deichsel positioniert sein könnte.

Die die Räder 7 tragenden Hebelarme 6 können sehr einfach auch voneinander unabhängig gegenüber dem Rahmen verstellt werden, vorzugsweise auf hier nicht dargestellte Weise hydraulisch oder pneumatisch, womit ein Hangausgleich im schrägen Gelände einfach möglich ist.

An der der Zugmaschinen-Hebehydraulik 10 abgewandten Hinterseite weist der Rahmen 2 eine weitere Tragevorrichtung 9' auf, die hier einen zusätzlichen Transportbehälter 11 trägt aber auch eine Arbeitsvorrichtung (beispielsweise eine Kreissäge, einen Holzspalter oder dergleichen) aufnehmen könnte oder ebenfalls zu einer umgedrehten fixen Verbindung mit der Zugmaschinen-Hebehydraulik 10 verwendet werden könnte.

Der damit erhaltene land- und forstwirtschaftliche Universalanhänger bietet gegenüber bisher bekannten Anhängern im wesentlichen die folgenden Vorteile:
Ein Großteil der Ladefläche plus eventuell heckseitig angebautem Transportbehälter, können aus der Transportstellung bis auf den Boden abgesenkt werden; das bedeutet, man kann z.B. bei der Brennholzernte zugeschnittene Baumstämme viel leichter manuell verladen als bei einem herkömmlicher Anhänger, wodurch man sich mühsames manuelles, oder kostspieliges und umweltschädliches Beladen mittels Forstkran und Verbrennungsmotor, oder das unwirtschaftliche Brennholzspalten (und/oder schneiden) an Ort und Stelle, ebenfalls mit umweltschädlichem Verbrennungsmotor, komplett ersparen kann.

Dadurch ist es möglich, die Brennholzaufarbeitung an einem Ort mit elektrischem Netzanschluss höchst wirtschaftlich und umweltfreundlich durchführen zu können, wobei die Anhängerladefläche mit eventuell heckseitig angebautem Transportbehälter auf eine komfortable Entladehöhe angehoben werden können.

Die Hinterachse ist wegen eines möglichen Hangausgleiches bei Geländeschrägfahrt als Einzelradaufhängung ausgeführt, damit man durch Schwerpunktverlagerung die Kippgefahr bei Schrägfahrten wesentlich verringern und andererseits, z.B. bei Entladetätigkeiten, die Ladefläche auch schräg stellen kann.

Aufgrund der genannten frontseitigen Dreipunktanbauvorrichtung kann der leere oder teilbeladene Anhänger (bei aufgeklappter, weggeschwenkter oder abgenommener Deichsel), mittels front- oder heckseitigem Dreipunktanbau an die Zugmaschine, sehr wendig und komfortabel auf Baustellen, oder bei Forstarbeiten eingesetzt werden. Speziell hinterradangetriebene Zugmaschinen mit Heckdreipunktanbau können im schwierigen Gelände bei Bergaufrückwärtsfahrten, zwischen Bäumen oder anderen Hindernissen durch die zusätzliche Gewichtsverlagerung auf die angetriebene Hinterachse der Zugmaschine Geländepunkte erreichen, die mit herkömmlichen Anhängern unerreichbar sind.

(Hauptproblem ist das Rückwärtsfahren mit herkömmlichen Anhängern, besonders mit Zweiachs- oder Mehrachsanhängern, zwischen Bäumen oder andern Hindernissen im hügeligem Gelände)

An eine heckseitige Dreipunktanbauvorrichtung des Anhängers kann man für Material- oder Werkzeugtransporte z.B. eine Gitterbox oder einen geschlossenen Behälter oder für Arbeitseinsätze z.B. eine Werkbank mit Schraubstock oder eine Seilwinde oder dergleichen anbauen.

Bei Zugmaschinen mit Front- und Heckdreipunktanbauvorrichtung kann man zwecks besserer Gewichtsverteilung, z.B. den leeren oder beladenen Transportbehälter frontseitig und den leeren oder teilbeladenen Anhänger heckseitig anbauen, damit man z.B. bei Durchforstungsarbeiten sehr wendig und hochgeländegängig schwierige Transportarbeiten durchführen kann.

Mit dem heckseitig an den Universalanhänger angebauten Transportbehälter oder Arbeitsgerät kann durch direkten front- oder heckseitigen Dreipunktanbau (wegen Längen- und Gewichtsreduktion) die Beweglichkeit der Zugmaschine zwischen Hindernisse noch weiter verbessert werden. (Seilwindeneinsatzmöglichkeit)

Für besonders schwere Einsätze kann der Universalanhänger auch mit mehreren angetriebenen, gefederten, gedämpften, gelenkten und entsprechend gebremsten Achsen ausgestattet werden.

## Patentansprüche

1. Land- und forstwirtschaftlicher Zugmaschinen-Anhänger (1) mit einem eine in der Höhe verstellbare Deichsel (3) zur Ankoppelung an die Zugmaschine (4) aufweisenden Rahmen (2), an dem an den Enden (5) von in der Höhe verschwenkbaren Hebelarmen (6) zumindest zwei Räder (7) angeordnet sind, durch deren Verschwenkung relativ zum Rahmen (2) dieser in der Höhe über Grund (8) verstellbar ist, **dadurch gekennzeichnet, dass** der Rahmen (2) an seiner im angehängten Zustand der Zugmaschine (4) zugewandten Seite eine Tragevorrichtung (9) zur starren Befestigung an der Zugmaschinen-Hebehydraulik (10) aufweist und damit von dieser samt Rädern (7) vom Grund (8) abgehoben verfahrbar ist.

2. Anhänger nach Anspruch 1, **dadurch gekennzeichnet, dass** die Tragevorrichtung (9) zumindest zum Teil an der, vorzugsweise hydraulisch oder pneumatisch hochklapp-und in der obersten Stellung fixierbaren, Deichsel (3) angeordnet ist.

3. Anhänger nach Anspruch 1, **dadurch gekennzeichnet, dass** die Deichsel (3) vom Rahmen (2) abnehmbar ausgebildet ist.

4. Anhänger nach einem der Ansprüche 1 bis 3, **dadurch gekennzeichnet, dass** die die Räder (7) tragenden Hebelarme (6) voneinander unabhängig gegenüber dem Rahmen (2) verstellbar sind, vorzugsweise hydraulisch oder pneumatisch.

5. Anhänger nach einem der Ansprüche 1 bis 4, **dadurch gekennzeichnet, dass** der Rahmen (2) an der der Zugmaschinen-Hebehydraulik (10) abgewandten Hinterseite eine weitere Tragevorrichtung (9') zur wahlweisen Ankoppelung an die Zugmaschine (4) oder einen zusätzlichen Transportbehälter (11), eine Arbeitsvorrichtung, oder dergleichen, aufweist.

## Claims

1. An agricultural and forestry tractor-trailer (1) comprising a frame (2) which has a height-adjustable drawbar (3) for coupling to the tractor (4), on which frame, at the ends (5) of lever arms (6) that are pivotable in height, at least two wheels (7) are arranged, wherein by pivoting said wheels relative to the frame (2), said frame can be adjusted in height above the ground (8), **characterized in that** the frame (2), on its side facing the tractor in the coupled state, has a carrying device (9) for a rigid fastening to the tractor-lifting hydraulics (10) and thus is movable when lifted together with the wheels (7) off the ground (8) by the tractor-lifting hydraulics.

2. The trailer according to claim 1, **characterized in that** the carrying device (9) is at least partially arranged on the drawbar (3) which can be folded upward, preferably hydraulically or pneumatically, and can be fixed in the uppermost position.

3. The trailer according to claim 1, **characterized in that** the drawbar (3) is formed to be removable from the frame (2).

4. The trailer according to any one of the claims 1 to 3, **characterized in that** the lever arms (6) carrying the wheels (7) can be displaced independently of each other, preferably hydraulically or pneumatically, with respect to the frame (2) .

5. The trailer according to any one of the claims 1 to 4, **characterized in that** the frame (2), on the rear side facing away from the tractor-lifting hydraulics (10), has another carrying device (9') for selectively coupling to the tractor (4), or to an additional transport container (11), or to a working device or the like.

## Revendications

1. Remorque (1) de tracteurs agricoles et forestiers comportant un châssis (2) qui présente un bras d'attelage (3) réglable en hauteur pour l'accouplement au tracteur (4) et sur lequel, aux extrémités (5) de bras de levier (6) pivotables en hauteur, sont disposées au moins deux roues (7), par le pivotement desquelles par rapport au châssis (2), celle-ci est réglable en hauteur au-dessus du sol (8), **caractérisée par le fait que** le châssis (2) présente, sur son côté tourné vers le tracteur (4) à l'état fixé, un dispositif de support (9) pour la fixation rigide au dispositif hydraulique de levage de tracteurs (10), et est ainsi déplaçable, soulevé du sol (8), par celui-ci conjointement avec les roues (7).

2. Remorque selon la revendication 1, **caractérisée par le fait que** le dispositif de support (9) est disposé au moins en partie sur le bras d'attelage (3), repliable de préférence de manière hydraulique ou pneumatique et apte à être fixé dans la position la plus haute.

3. Remorque selon la revendication 1, **caractérisée par le fait que** le bras d'attelage (3) est réalisé apte à être retiré du châssis (2)

4. Remorque selon l'une des revendications 1 à 3, **caractérisée par le fait que** les bras de levier (6) portant les roues (7) sont réglables indépendamment les uns des autres par rapport au châssis (2), de préférence de manière hydraulique ou pneumatique.

5. Remorque selon l'une des revendications 1 à 4, **caractérisée par le fait que** le châssis (2) présente sur le côté arrière éloigné du dispositif hydraulique de levage de tracteurs (10) un autre dispositif de support (9') pour l'accouplement facultatif au tracteur (4) ou à un conteneur de transport supplémentaire (11), un dispositif de travail ou similaires.
